# FASCICULE DE BREVET EUROPEEN

(11) **EP 3 288 738 B1**
(45) Date de publication et mention de la délivrance du brevet: **03.04.2019**
(21) Numéro de dépôt: 16722314.8
(22) Date de dépôt: 26.04.2016
(51) Int. Cl.: B29B 11/16, F01D 5/28, B29L 31/08

(54) **AUBE MUNIE DE PLATEFORMES POSSEDANT UNE JAMBE DE RETENUE.**
SCHAUFEL MIT PLATTFORMEN MIT EINEM HALTEBEIN
VANE EQUIPPED WITH PLATFORMS COMPRISING A RETAINING LEG

(30) Priorité: 29.04.2015 FR 1553851
(43) Date de publication de la demande: 07.03.2018
(73) Titulaire: SAFRAN AIRCRAFT ENGINES, 75015 Paris (FR)
(72) Inventeur: DE GAILLARD, Thomas, Alain, 77550 Moissy-Cramayel Cedex (FR); BERDOU, Caroline, Jacqueline, Denise, 77550 Moissy-Cramayel Cedex (FR); BOISSON, Alexandre, Bernard, Marie, 77550 Moissy-Cramayel Cedex (FR); GIMAT, Matthieu, Arnaud, 77550 Moissy-Cramayel Cedex (FR)
(74) Mandataire: Cabinet Beau de Loménie
(86) Numéro de dépôt international: PCT/FR2016/050982
(87) Numéro de publication internationale: WO 2016/174346

(56) Documents cités:
- WO-A1-2013/079860
- WO-A1-2014/076408
- WO-A2-2013/104852

## Description

### DOMAINE DE L'INVENTION

Le présent exposé concerne une préforme pour une aube de turbomachine ainsi qu'une aube monobloc pouvant être formée au moyen d'une telle préforme, une roue aubagée et une turbomachine comprenant une telle aube.

Une telle préforme peut être utilisée pour réaliser des aubes comprenant des plateformes aérodynamiques munies de jambes de retenue. De telles aubes peuvent être notamment des aubes de soufflante d'un turboréacteur d'avion, pour ne citer que cet exemple.

### ETAT DE LA TECHNIQUE ANTERIEURE

Afin de réduire la masse des turboréacteurs d'avion, et donc de réduire la consommation de ces turboréacteurs, il est désormais connu de fabriquer certaines aubes du réacteur en matériau composite, bien plus léger que le métal traditionnellement utilisé jusqu'alors.

A cette fin, il est également connu aujourd'hui d'utiliser des techniques de tissage tridimensionnel afin d'obtenir des préformes fibreuses aboutissant à des aubes composites de très bonne qualité. Le document WO 2014/076408 décrit notamment un procédé de tissage d'une préforme fibreuse permettant d'obtenir de manière monobloc des aubes munies de plateformes intrados et extrados, ces plateformes étant d'épaisseur constante.

Toutefois, ces plateformes doivent répondre à un grand nombre d'exigences et assurer de nombreuses fonctions. De manière principale, de telles plateformes doivent assurer une fonction aérodynamique de définition et de canalisation de la veine d'écoulement de l'air dans le turboréacteur. Toutefois, elles doivent également assurer une tenue mécanique garantie pour toutes les phases de vol ainsi qu'une intégration cohérente dans l'environnement du moteur en évitant notamment d'introduire des perturbations dans la veine d'air en aval. Ainsi, la géométrie des plateformes doit être finement contrôlée, et ceci durant tout le fonctionnement du moteur, et quelle que soit la phase du vol.

Or, en particulier, lors de tests et simulations réalisées sur de telles aubes, les inventeurs ont constaté que différentes zones de ces plateformes issues d'un tissage 3D se déformaient de manière plus ou moins importante sous l'effet des efforts centrifuges s'exerçant lors du fonctionnement de la turbomachine. Les inventeurs ont notamment remarqué que la déformation d'une zone d'une plateforme est d'autant plus importante qu'elle présente un déport important par rapport à la pale.

Dès lors, ces plateformes présentent en fonctionnement des irrégularités de forme susceptibles de perturber la veine d'air et donc le rendement de la turbomachine. En outre, les inventeurs ont constaté que le fléchissement est dépendant, entre autres, de la longueur du porte-à-faux. Ainsi, le porte-à-faux étant différent entre les plateformes extrados et intrados de deux aubes consécutives, il en résulte une discontinuité de fléchissement à cet interface et un risque de chevauchement des plateformes.

Il existe donc un réel besoin pour une préforme, une aube, une roue aubagée et une turbomachine qui soient dépourvus, au moins en partie, des inconvénients inhérents aux systèmes connus précités.

### PRESENTATION DE L'INVENTION

Le présent exposé concerne une préforme pour une aube de turbomachine, obtenue par tissage tridimensionnel, comprenant un premier tronçon longitudinal, apte à former au moins une portion d'un pied d'aube, un deuxième tronçon longitudinal, prolongeant vers le haut le premier tronçon longitudinal, apte à former au moins une portion d'une échasse, un troisième tronçon longitudinal, prolongeant vers le haut le deuxième tronçon longitudinal, apte à former une partie de pale, un premier tronçon transversal, s'étendant transversalement depuis la jonction entre les deuxième et troisième tronçons longitudinaux, apte à former une première plateforme, et un premier tronçon oblique, s'étendant depuis la jonction entre les premier et deuxième tronçons longitudinaux jusqu'au premier tronçon transversal, apte à former une jambe de retenue pour la première plateforme.

Grâce à une telle préforme, il est possible d'obtenir de manière monobloc une aube comprenant un pied d'aube, une échasse, une partie de pale et au moins une plate-forme munie d'une jambe de retenue permettant de retenir la plateforme à l'encontre de la force centrifuge au cours du fonctionnement de la turbomachine. On rigidifie ainsi la plateforme et on réduit ses déformations en fonctionnement.

En effet, les efforts centrifuges s'exerçant sur la plateforme sont repris par la jambe de retenue et transmis jusqu'au pied ou à l'échasse de l'aube qui sont des parties structurales de l'aube. La plateforme et la jambe de retenue forment ainsi une sorte de caisson qui réduit l'importance du porte-à-faux de la plateforme. Dès lors, la plate-forme conserve en fonctionnement un profil relativement régulier, ne perturbant pas ou peu la circulation de la veine d'air.

Grâce à cette préforme, on peut donc bénéficier des avantages d'une aube monobloc tissée 3D (gain de masse ; nombre de pièces réduit ; montage et maintenance simplifiés etc.) tout en assurant une régularité aérodynamique de la veine d'air.

De plus, cette configuration permet également de réduire la discontinuité habituellement constatée en fonctionnement à l'interface entre plateformes voisines. En outre, la jambe de retenue permet également de réduire le risque de chevauchement d'une plateforme sur la plateforme voisine, en cas d'ingestion d'oiseau par exemple.

Dans le présent exposé, les termes « longitudinal », « transversal », « inférieur », « supérieur » et leurs dérivés sont définis par rapport à la direction principale de l'aube considérée, le pied d'aube étant situé du côté inférieur de l'aube selon cette référence ; les termes « proximal », « distal » et leurs dérivés sont définis par rapport à la pale de l'aube ; les termes « axial », « radial », « tangentiel » et leurs dérivés sont quant à eux définis par rapport à l'axe principal de la roue comportant ces aubes, c'est-à-dire en général l'axe de la turbomachine. On entend par « plan axial » un plan passant par l'axe principal de la turbomachine et par « plan radial » un plan perpendiculaire à cet axe principal ; on entend par « plan longitudinal » un plan parallèle à la direction principale de l'aube et perpendiculaire à la direction d'extension du pied d'aube : un tel plan longitudinal est donc un plan radial dans le référentiel de la turbomachine. En outre, les termes « amont » et « aval » sont définis par rapport à la circulation de l'air dans la turbomachine.

Enfin, on entend par « tissage tridimensionnel » une technique de tissage dans laquelle des fils de trame circulent au sein d'une matrice de fils de chaîne de manière à former un réseau tridimensionnel de fils selon une armure tridimensionnelle : toutes les couches de fils d'une telle structure fibreuse sont alors tissées au cours d'une même étape de tissage au sein d'un métier à tisser tridimensionnel.

Dans certains modes de réalisation, le premier tronçon oblique est continu depuis l'extrémité amont jusqu'à l'extrémité aval de la préforme. La plateforme est ainsi retenue sur toute sa longueur, ce qui réduit plus efficacement ses déformations.

Dans d'autres modes de réalisation, le premier tronçon oblique comprend plusieurs pattes réparties d'amont en aval. Cette configuration permet de réduire la masse de la préforme et donc de l'aube finale. Elle facilite également le démoulage de l'aube après consolidation de la préforme.

Dans certains modes de réalisation, l'extrémité distale du premier tronçon oblique longe l'extrémité distale du premier tronçon transversal. De cette manière, les efforts centrifuges sont repris au niveau de la plateforme où ils sont les plus importants, c'est-à-dire où la plateforme présente le déport le plus important par rapport à la partie de pale.

Dans certains modes de réalisation, l'extrémité distale du premier tronçon oblique est attachée au premier tronçon transversal. Ceci facilite la mise en forme de la préforme en vue de sa consolidation pour aboutir à une aube finale dans laquelle la plateforme et la jambe de retenue sont solidaires. Cette fixation peut être réalisée par un moyen de fixation quelconque, par exemple par couture, collage, rivetage ou encore brochage.

Dans certains modes de réalisation, le premier tronçon oblique est sensiblement plan. Ceci facilite la transmission des efforts jusqu'au pied ou à l'échasse de l'aube.

Dans certains modes de réalisation, le premier tronçon longitudinal possède une longueur sensiblement constante depuis l'extrémité amont jusqu'à l'extrémité aval de la préforme. Ceci facilite la réalisation de la déliaison à l'origine de la séparation du deuxième tronçon longitudinal et du premier tronçon oblique.

Dans certains modes de réalisation, la longueur du deuxième tronçon longitudinal augmente depuis l'extrémité amont de la préforme jusqu'à son extrémité aval. Ceci est tout particulièrement utile dans le cas d'une aube de soufflante pour assurer la continuité de la veine d'air entre la virole amont, de petit diamètre, et le tambour aval, de diamètre plus important.

Dans certains modes de réalisation, la préforme fibreuse comprend un deuxième tronçon transversal, s'étendant transversalement depuis la jonction entre les deuxième et troisième tronçons longitudinaux, dans le prolongement et à l'opposé du premier tronçon transversal, apte à former une deuxième plateforme, et la préforme comprend en outre un deuxième tronçon oblique, s'étendant depuis la jonction entre les premier et deuxième tronçons longitudinaux jusqu'au deuxième tronçon transversal, apte à former une jambe de retenue pour la deuxième plateforme.

On comprend naturellement que toutes les caractéristiques évoquées ci-dessus au sujet du premier tronçon transversal et du premier tronçon oblique peuvent se transposer au deuxième tronçon transversal et au deuxième tronçon oblique.

Dans d'autres modes de réalisation, la préforme fibreuse ne comprend qu'un seul tronçon transversal et un seul tronçon oblique. Dans un tel cas, l'aube finale possède une plateforme unique adaptée pour s'étendre jusqu'à l'aube voisine, ce qui augmente la régularité de la veine d'air entre deux aubes voisines. Dans un tel cas, la plateforme est de préférence prévue du côté extrados : ceci facilite la mise en forme puis le démoulage de l'aube après consolidation de la préforme.

Dans certaines modes de réalisation, la préforme comprend un élément d'interface prévu au niveau de la jonction entre les deuxième et troisième tronçons longitudinaux sur sa surface opposée au premier tronçon transversal. Cet élément d'interface permet de coopérer avec la plateforme coïncidente de l'aube voisine. En fonction de sa configuration, il peut ainsi protéger l'aube issue de cette préforme en cas de choc avec l'aube voisine, en cas d'ingestion d'oiseau par exemple, et/ou bloquer la position de la plateforme de l'aube voisine à l'encontre des forces centrifuges. Dans certains modes de réalisation, l'élément d'interface est une bande métallique rapportée. Cette bande peut par exemple être fixée sur la préforme avant sa co-injection avec cette dernière.

Dans certains modes de réalisation, l'élément d'interface est une bande tissée s'étendant depuis la jonction entre les deuxième et troisième tronçons longitudinaux.

Dans certains modes de réalisation, les fils utilisés pour le tissage de la préforme sont des fibres de carbone. Il peut toutefois s'agir de n'importe quel autre type de fil, par exemple des fibres de verre ou de kevlar.

Dans certains modes de réalisation, l'armure utilisée pour le tissage tridimensionnel de la préforme est du type interlock 3D. Toutefois, le tissage des surfaces externes de la préforme peut être essentiellement bidimensionnel, du type satin par exemple.

Le présent exposé concerne également une aube pour turbomachine, comprenant un pied d'aube, une échasse, s'étendant vers le haut depuis le pied d'aube, une partie de pale, s'étendant vers le haut depuis l'échasse, une plateforme, s'étendant transversalement à la partie de pale au niveau de la jonction entre l'échasse et la partie de pale, et une jambe de retenue, s'étendant entre le pied ou l'échasse d'une part et la plateforme d'autre part.

On comprend que cette aube correspond à celle que l'on peut obtenir à l'aide de la préforme ci-dessus. Toutefois, une telle aube pourrait également être obtenue à l'aide d'un autre procédé et réalisée dans un autre matériau : une telle aube pourrait par exemple être réalisée en métal à l'aide d'un procédé de fonderie adapté. Dans un cas comme dans l'autre, toutes les caractéristiques et avantages décrits ci-dessus se transposent directement à cette aube, quelle que soit sa technique d'obtention.

Dans certains modes de réalisation, l'aube est réalisée de manière monobloc en matériau composite au moyen d'une préforme selon l'un quelconque des modes de réalisation précédents, ladite préforme ayant été mise en forme dans un moule et noyée dans une matrice.

Dans certains modes de réalisation, la matrice est de type organique. Il peut notamment s'agir d'une résine époxy.

Le présent exposé concerne également une roue aubagée pour turbomachine, comprenant une pluralité d'aubes selon l'un des modes de réalisation précédents.

Il peut s'agir d'une roue de rotor, telle une soufflante, dans laquelle les aubes sont disposées angulairement autour d'un moyeu tournant, ou d'une roue de stator, dans laquelle les aubes sont disposée angulairement au sein d'une virole fixe.

Le présent exposé concerne également une turbomachine, comprenant au moins une aube ou une roue aubagée selon l'un des modes de réalisation précédents.

Les caractéristiques et avantages précités, ainsi que d'autres, apparaîtront à la lecture de la description détaillée qui suit, d'exemples de réalisation de la préforme, de l'aube, de la roue aubagée et de la turbomachine proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.

La FIG 1 est un plan en coupe axiale d'une turbomachine selon l'invention.

La FIG 2 est un schéma partiel en coupe radiale d'une roue aubagée selon l'invention.

La FIG 3 est une vue partielle en perspective d'une aube selon un exemple de réalisation.

La FIG 4 est une vue partielle de l'aube de la FIG 3 en perspective sous un autre angle.

La FIG 5 illustre de manière schématique la préforme correspondant à cet exemple d'aube avant sa mise en forme.

La FIG 6 illustre de manière schématique la préforme correspondant à cet exemple d'aube après sa mise en forme.

La FIG 7A illustre de manière schématique un deuxième exemple de préforme avant mise en forme.

La FIG 7B illustre de manière schématique la préforme de ce deuxième exemple après sa mise en forme.

### DESCRIPTION DETAILLEE D'EXEMPLES DE REALISATION

Afin de rendre plus concrète l'invention, des exemples de réalisation sont décrits en détail ci-après, en référence aux dessins annexés. Il est rappelé que l'invention ne se limite pas à ces exemples.

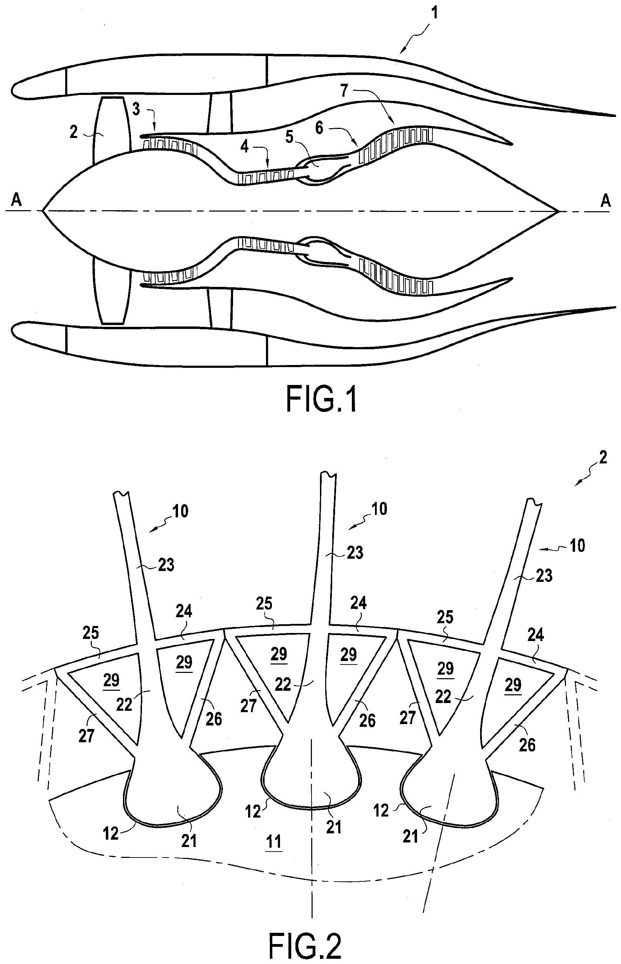

La FIG 1 représente, en coupe selon un plan vertical passant par son axe principal A, un turboréacteur à double flux 1 selon l'invention. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7.

Comme cela est représenté sur la FIG. 2, la soufflante 2 est munie d'une pluralité d'aubes de soufflante 10 montées angulairement autour de l'axe A sur un disque 11 connecté à l'arbre basse pression de la turbomachine 1.

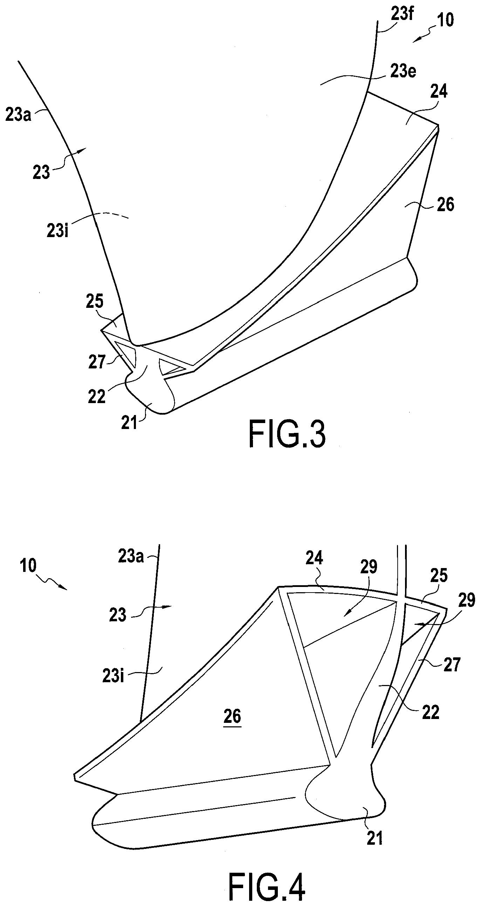

Une telle aube de soufflante est représentée sur les FIG. 3 et 4. Elle comprend un pied d'aube 21 en queue d'aronde configurée pour s'engager dans une rainure 12 du disque 11 afin de la fixer au disque 11. Ce pied d'aube 21 est prolongé vers le haut par une échasse 22 puis par une pale 23 présentant une face extrados 23e et une face intrados 23i s'entendant chacune d'amont en aval entre un bord d'attaque 23a et un bord de fuite 23f.

L'aube 10 comprend en outre une plateforme extrados 24, s'étendant transversalement du côté extrados de l'aube depuis la jonction entre l'échasse 22 et la pale 23, et une plateforme intrados 25, s'étendant transversalement du côté intrados de l'aube depuis la jonction entre l'échasse 22 et la pale 23.

L'aube 10 comprend de plus une jambe de retenue extrados 26, s'étendant depuis la jonction entre le pied d'aube 21 et l'échasse 22 jusqu'à l'extrémité distale de la plateforme extrados 24, et, de manière analogue, une jambe de retenue intrados 27, s'étendant depuis la jonction entre le pied d'aube 21 et l'échasse 22 jusqu'à l'extrémité distale de la plateforme intrados 25. Ainsi, de chaque côté de l'aube 10, chaque plateforme 24, 25 forme avec sa jambe de retenue 26, 27 et l'échasse 22 un caisson creux 29 possédant un profil sensiblement triangulaire.

Comme cela est visible sur les FIG 3 et 4, la zone de jonction entre le pied d'aube 21 et l'échasse 22 est prévue à une hauteur sensiblement constante tout le long de l'aube 10 d'amont en aval. En revanche, la hauteur de l'échasse 22 augmente d'amont en aval de telle sorte que les caissons 29 possèdent une forme en entonnoir s'ouvrant vers le côté aval de l'aube 10.

Dans cet exemple, l'aube 10 est obtenue de manière monobloc par tissage 3D d'une préforme fibreuse 30, mise en forme de cette préforme 30 et injection d'une résine organique selon le procédé RTM connu de l'homme du métier.

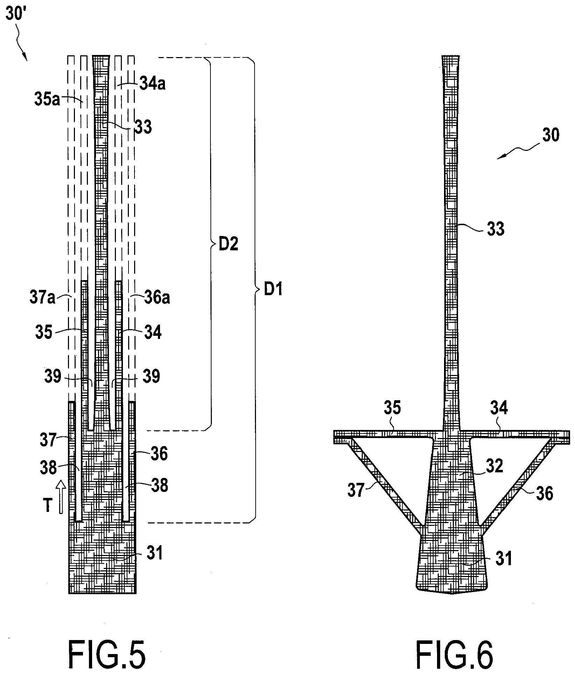

La FIG 5 représente l'ébauche 30' tissée tridimensionnellement de cette préforme 30 permettant de réaliser cet exemple d'aube 10. La FIG 6 représente la préforme finale 30 après découpage et mise en forme de cette ébauche 30'. Cette ébauche de préforme 30' va être décrite de bas en haut, c'est-à-dire d'amont en aval dans la direction T de tissage. Il va toutefois de soi que le tissage pourrait être réalisé à partir de l'autre extrémité et dans l'autre sens.

Dans cet exemple de réalisation, la préforme 30 est tissée tridimensionnellement en fibres de carbone selon une armure interlock 3D. Seules les surfaces de la préforme 30 sont tissées bidimensionnellement selon une armure de type satin.

A l'extrémité inférieure, le tissage débute par la réalisation d'un premier tronçon longitudinal 31 qui formera le pied 21 de l'aube 10.

Au-dessus de ce premier tronçon longitudinal 31, débute une première zone de déliaison D1 dans laquelle un premier pan libre 36a, un deuxième tronçon longitudinal 32, et un deuxième pan libre 37a sont tissés conjointement de manière déliée avec des plans de déliaison 38. Des méthodes de tissage permettant une telle déliaison sont désormais bien connues dans le domaine du tissage 3D. Ces premier et deuxième pans libres possèdent de préférence une épaisseur de deux ou trois couches de fils, soit une épaisseur d'environ 2 ou 3 mm. Cette première zone de déliaison peut débuter à une hauteur quelconque de la future échasse.

Au-dessus du deuxième tronçon longitudinal 32, débute une deuxième zone de déliaison D2 dans laquelle la suite du premier pan libre 36a, un troisième pan libre 34a, un troisième tronçon longitudinal 33, un quatrième pan libre 35a et la suite du deuxième pan libre 37a sont tissés conjointement de manière déliée avec deux nouveaux plans de déliaison 39 s'ajoutant aux premiers plans de déliaison 38 qui se prolongent.

Une fois le tissage terminé, les troisième et quatrième pans libres 34a et 35a sont découpés de manière à former un premier tronçon transversal 34, qui formera la plate-forme extrados 24 de l'aube 10, et un deuxième tronçon transversal 35, qui formera la plate-forme intrados 25 de l'aube 10.

Les premier et deuxième pans libres 36a et 37a sont également découpés de manière à former un premier tronçon oblique 36, qui formera la jambe de retenue extrados 26 de l'aube 10, et un deuxième tronçon oblique 37, qui formera la jambe de retenue 27 de l'aube 10.

Il faut noter ici que les qualificatifs « oblique », « transversal » et « longitudinal » sont donnés en fonction de la position finale du tronçon considéré de la préforme 30, les tronçons transversaux et obliques étant nécessairement tissés longitudinalement avant d'être repliés transversalement et obliquement respectivement.

L'ébauche 30' peut ensuite être humidifiée pour l'assouplir et permettre un décadrage plus aisé des fibres. L'ébauche 30' est alors introduite dans un moule de formage dont l'espace intérieur est ajusté à la géométrie recherchée pour la préforme 30.

On sèche ensuite la préforme 30 afin que celle-ci se raidisse, bloquant ainsi la géométrie imposée lors de la mise en forme. Comme cela est représenté à la FIG 6, l'extrémité distale de chaque tronçon oblique 36, 37 s'étend alors le long de l'extrémité distale du tronçon transversal 34, 35 correspondant. Les extrémités de ces tronçons peuvent alors être cousues ensemble pour les solidariser.

La préforme 30 ainsi mise en forme est enfin disposée dans un moule d'injection, aux dimensions de l'aube finale souhaitée 10. Des inserts sont en outre insérés dans les caissons formés par les tronçons transversaux 34, 35 et obliques 36, 37 afin de maintenir la forme de ces derniers et d'empêcher la matrice de remplir le volume interne de ces caissons. On injecte alors la matrice, ici une résine epoxy. Une telle injection peut par exemple être réalisée par le procédé connu RTM (« resin transfer molding »). A l'issue de cette consolidation, on retire les inserts des caissons 29 et on obtient alors l'aube souhaitée 10.

Naturellement, l'exemple de tissage décrit ci-dessus n'est qu'un exemple parmi de nombreux autres possibles que l'homme du métier reconnaîtra aisément. En particulier, il est possible d'imaginer d'autres déliaisons ou d'utiliser d'autres techniques de tissage tels des croisements de couches, des sorties de couches ou des transitions d'épaisseur pour obtenir une géométrie de préforme analogue. L'homme du métier trouvera notamment de nombreux exemples de tissages dans le document WO 2014/076408.

En particulier, dans une variante de réalisation, les premier et deuxième pans libres 36a et 37a sont découpés en certains endroits jusqu'à la zone de jonction entre les premier et deuxième tronçons longitudinaux. Dans un tel cas, les tronçons obliques 36, 37 obtenus sont formés en réalité d'une pluralité de pattes espacées les unes des autres.

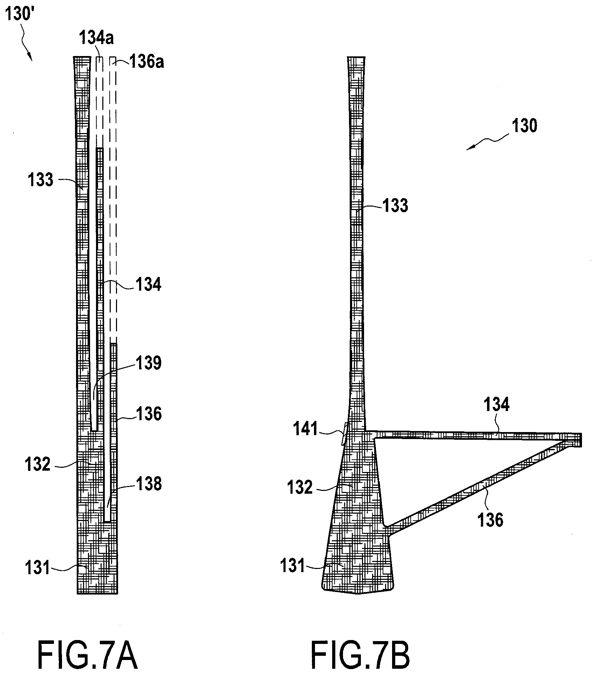

Les FIG 7A et 7B illustrent un deuxième exemple de préforme 130. Dans ce deuxième exemple, la préforme 130 ne comprend qu'un seul tronçon transversal 134 et un seul tronçon oblique 136 prévus du côté extrados. L'aube issue d'une telle préforme 130 ne possède ainsi qu'une seule plateforme, prévue sur son côté extrados. Cette plateforme et sa jambe de retenue sont dès lors plus longues pour combler tout l'espace séparant deux aubes consécutives au sein de la soufflante.

Ainsi, la méthode de tissage de l'ébauche 130' de cette préforme 130 est tout à fait analogue à celle du premier exemple si ce n'est que seuls les premier et troisième pans libre 136a, 134a sont tissés de manière déliée avec les tronçons longitudinaux 132 et 133 de l'ébauche 130'. En outre, ces plans libres 134a et 136a sont découpés à une plus grande hauteur afin de doter les tronçons transversal 134 et oblique 136 d'une plus grande longueur.

De plus, dans ce deuxième exemple, une bande métallique 141 est rapportée tout le long de la préforme 130 au niveau de la jonction entre les deuxième et troisième tronçons longitudinaux 132, 133, sur le côté opposé au tronçon transversal 134. Lors de l'injection de la matrice, cette bande métallique 141 est alors emprisonnée en surface de l'aube et forme
ainsi un élément d'interface apte à coopérer avec l'extrémité distale de la plateforme d'une aube voisine.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Préforme pour une aube de turbomachine, obtenue par tissage tridimensionnel, comprenant
un premier tronçon longitudinal (31), apte à former au moins une portion d'un pied d'aube (21),
un deuxième tronçon longitudinal (32), prolongeant vers le haut le premier tronçon longitudinal (31), apte à former au moins une portion d'une échasse (22),
un troisième tronçon longitudinal (33), prolongeant vers le haut le deuxième tronçon longitudinal (32), apte à former une partie de pale (23),
un premier tronçon transversal (34), s'étendant transversalement depuis la jonction entre les deuxième et troisième tronçons longitudinaux (32, 33), apte à former une première plateforme (24), et
un premier tronçon oblique (36), s'étendant depuis la jonction entre les premier et deuxième tronçons longitudinaux (31, 32) jusqu'au premier tronçon transversal (34), apte à former une jambe de retenue (26) pour la première plateforme (24).

2. Préforme selon la revendication 1, dans laquelle l'extrémité distale du premier tronçon oblique (36) longe l'extrémité distale du premier tronçon transversal (34).

3. Préforme selon la revendication 1 ou 2, dans laquelle l'extrémité distale du premier tronçon oblique (36) est attaché au premier tronçon transversal (34).

4. Préforme selon l'une quelconque des revendications 1 à 3, dans laquelle le premier tronçon longitudinal (31) possède une longueur sensiblement constante depuis l'extrémité amont jusqu'à l'extrémité aval de la préforme (30), et
dans laquelle la longueur du deuxième tronçon longitudinal (32) augmente depuis l'extrémité amont de la préforme jusqu'à son extrémité aval.

5. Préforme selon l'une quelconque des revendications 1 à 4, comprenant
un deuxième tronçon transversal (35), s'étendant transversalement depuis la jonction entre les deuxième et troisième tronçons longitudinaux (32, 33), dans le prolongement et à l'opposé du premier tronçon transversal (34), apte à former une deuxième plateforme (25), et
un deuxième tronçon oblique (37), s'étendant depuis la jonction entre les premier et deuxième tronçons longitudinaux (31, 32) jusqu'au deuxième tronçon transversal (35), apte à former une jambe de retenue (27) pour la deuxième plateforme (25).

6. Préforme selon l'une quelconque des revendications 1 à 4, comprenant un élément d'interface (141) prévu au niveau de la jonction entre les deuxième et troisième tronçons longitudinaux (132, 133) sur sa surface opposée au premier tronçon transversal (134).

7. Préforme selon la revendication 6, dans laquelle l'élément d'interface est une bande métallique (141) rapportée.

8. Aube pour turbomachine, comprenant
un pied d'aube (21),
une échasse (22), s'étendant vers le haut depuis le pied d'aube (21),
une partie de pale (23), s'étendant vers le haut depuis l'échasse (22),
une plateforme (24), s'étendant transversalement à la partie de pale (23) au niveau de la jonction entre l'échasse (22) et la partie de pale (23), et
une jambe de retenue (26), s'étendant entre le pied (21) ou l'échasse (22) d'une part et la plateforme (24) d'autre part.

9. Aube selon la revendication 8, réalisée de manière monobloc en matériau composite au moyen d'une préforme (30) selon l'une quelconque des revendications 1 à 7, ladite préforme (30) ayant été mise en forme dans un moule et noyée dans une matrice, de préférence de type organique.

10. Roue aubagée pour turbomachine, comprenant une pluralité d'aubes (10) selon la revendication 8 ou 9.

11. Turbomachine, comprenant au moins une aube (10) selon l'une des revendications 8 ou 9 ou une roue aubagée (2) selon la revendication 10.

## Patentansprüche

1. Vorform für eine Turbomaschinenschaufel, die durch dreidimensionales Weben erhalten wird, umfassend
einen ersten Längsabschnitt (31), der geeignet ist, mindestens einen Teil eines Schaufelfußes (21) zu bilden,
einen zweiten Längsabschnitt (32), der den ersten Längsabschnitt (31) nach oben verlängert und geeignet ist, zumindest einen Teil einer Stütze (22) zu bilden,
einen dritten Längsabschnitt (33), der den zweiten Längsabschnitt (32) nach oben verlängert und geeignet ist, einen Blattteil (23) zu bilden,
einen ersten Querabschnitt (34), der sich quer von der Verbindung zwischen dem zweiten und dritten Längsabschnitt (32, 33) erstreckt und geeignet ist, eine erste Plattform (24) zu bilden, und
einen ersten schrägen Abschnitt (36), der sich von der Verbindung zwischen dem ersten und zweiten Längsabschnitt (31, 32) bis zu dem ersten Querabschnitt (34) erstreckt und geeignet ist, einen Rückhalteschenkel (26) für die erste Plattform (24) zu bilden.

2. Vorform nach Anspruch 1, wobei das distale Ende des ersten schrägen Abschnitts (36) an dem distalen Ende des ersten Querabschnitts (34) entlangführt.

3. Vorform nach Anspruch 1 oder 2, wobei das distale Ende des ersten schrägen Abschnitts (36) an dem ersten Querabschnitt (34) angebracht ist.

4. Vorform nach einem der Ansprüche 1 bis 3, wobei der erste Längsabschnitt (31) eine im Wesentlichen konstante Länge von dem vorgelagerten Ende bis zu dem nachgelagerten Ende der Vorform (30) besitzt, und
wobei die Länge des zweiten Längsabschnitts (32) von dem vorgelagerten Ende der Vorform bis zu ihrem nachgelagerten Ende zunimmt.

5. Vorform nach einem der Ansprüche 1 bis 4, umfassend
einen zweiten Querabschnitt (35), der sich quer von der Verbindung zwischen dem zweiten und dritten Längsabschnitt (32, 33) in der Verlängerung des und gegenüber dem ersten Querabschnitt(s) (34) erstreckt und geeignet ist, eine zweite Plattform (25) zu bilden, und
einen zweiten schrägen Abschnitt (37), der sich von der Verbindung zwischen dem ersten und zweiten Längsabschnitt (31, 32) bis zu dem zweiten Querabschnitt (35) erstreckt und geeignet ist, einen Rückhalteschenkel (27) für die zweite Plattform (25) zu bilden.

6. Vorform nach einem der Ansprüche 1 bis 4, umfassend ein Schnittstellenelement (141), das auf Höhe der Verbindung zwischen dem zweiten und dritten Längsabschnitt (132, 133) auf ihrer Fläche vorgesehen ist, die dem ersten Querabschnitt (134) gegenüberliegt.

7. Vorform nach Anspruch 6, wobei das Schnittstellenelement ein aufgestecktes Metallband (141) ist.

8. Turbomaschinenschaufel, umfassend
einen Schaufelfuß (21),
eine Stütze (22), die sich von dem Schaufelfuß (21) nach oben erstreckt,
einen Blattteil (23), der sich von der Stütze (22) nach oben erstreckt,
eine Plattform (24), die sich quer zu dem Blattteil (23) auf Höhe der Verbindung zwischen der Stütze (22) und dem Blattteil (23) erstreckt, und
einen Rückhalteschenkel (26), der sich einerseits zwischen dem Fuß (21) oder der Stütze (22) und andererseits der Plattform (24) erstreckt.

9. Schaufel nach Anspruch 8, die aus Verbundmaterial mithilfe einer Vorform (30) nach einem der Ansprüche 1 bis 7 einstückig ausgeführt ist, wobei die Vorform (30) in einer Form geformt und in einer Matrize, vorzugsweise vom organischen Typ, versenkt wurde.

10. Schaufelrad für eine Turbomaschine, umfassend mehrere Schaufeln (10) nach Anspruch 8 oder 9.

11. Turbomaschine, umfassend mindestens eine Schaufel (10) nach einem der Ansprüche 8 oder 9 oder ein Schaufelrad (2) nach Anspruch 10.

## Claims

1. A preform for a turbine engine blade, the preform being obtained by three-dimensional weaving and comprising:
a first longitudinal segment (31) suitable for forming at least a portion of a blade root (21);
a second longitudinal segment (32) extending the first longitudinal segment (31) upwards, and suitable for forming at least a portion of a stilt portion (22);
a third longitudinal segment (33) extending the second longitudinal segment (32) upwards, and suitable for forming an airfoil portion (23);
a first transverse segment (34) extending transversely from the junction between the second and third longitudinal segments (32, 33), and suitable for forming a first platform (24); and
a first oblique segment (36) extending from the junction between the first and second longitudinal segments (31, 32) to the first transverse segment (34), and suitable for forming a retaining leg (26) for the first platform (24).

2. A preform according to claim 1, wherein the distal end of the first oblique segment (36) runs along the distal end of the first transverse segment (34).

3. A preform according to claim 1 or claim 2, wherein the distal end of the first oblique segment (36) is attached to the first transverse segment (34).

4. A preform according to any one of claims 1 to 3, wherein the first longitudinal segment (31) possesses a length that is substantially constant from the upstream end to the downstream end of the preform (30); and
wherein the length of the second longitudinal segment (32) increases going from the upstream end of the preform to its downstream end.

5. A preform according to any one of claims 1 to 4, and including:
a second transverse segment (35) extending transversely from the junction between the second and third longitudinal segments (32, 33), level with and going away from the first transverse segment (34), being suitable for forming a second platform (25); and
a second oblique segment (37) extending from the junction between the first and second longitudinal segments (31, 32) to the second transverse segment (35), and suitable for forming a retaining leg (27) for the second platform (25).

6. A preform according to any one of claims 1 to 4, including an interface element (141) provided at the junction between the second and third longitudinal segments (132, 133) on its surface opposite from the first transverse segment (134).

7. A preform according to claim 6, wherein the interface element is a fitted metal strip (141).

8. A turbine engine blade comprising:
a blade root (21);
a stilt portion(22) extending upwards from the blade root (21);
an airfoil portion (23) extending upwards from the stilt portion (22);
a platform (24) extending transversely to the airfoil portion (23) from the junction between the stilt portion(22) and the airfoil portion (23); and
a retaining leg (26) extending between the root (21) or the stilt portion (22) at one end and the platform (24) at the other end.

9. A blade according to claim 8, made in single-piece manner out of composite material by means of a preform (30) according to any one of claims 1 to 7, said preform (30) being shaped in a mold and embedded in a matrix, preferably of organic type.

10. A bladed wheel for a turbine engine, and including a plurality of blades (10) according to claim 8 or claim 9.

11. A turbine engine including at least one blade (10) according to claim 8 or claim 9, or a bladed wheel (2) according to claim 10.
